(19) Europäisches Patentamt
European Patent Office
Office européen des brevets

(11) EP 2 674 804 A1

(12) EUROPEAN PATENT APPLICATION
published in accordance with Art. 153(4) EPC

(43) Date of publication:
**18.12.2013 Bulletin 2013/51**

(21) Application number: **12744420.6**

(22) Date of filing: **08.02.2012**

(51) Int Cl.:
***G02B 26/00*** *(2006.01)* ***C08J 5/18*** *(2006.01)*
***G01N 1/00*** *(2006.01)* ***G02B 3/14*** *(2006.01)*
***G02F 1/17*** *(2006.01)* ***G11B 7/135*** *(2012.01)*

(86) International application number:
**PCT/JP2012/052858**

(87) International publication number:
**WO 2012/108463 (16.08.2012 Gazette 2012/33)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **10.02.2011 JP 2011027115**

(71) Applicant: **DAIKIN INDUSTRIES, LTD.**
**Osaka-shi, Osaka 530-8323 (JP)**

(72) Inventors:
- **KODANI, Tetsuhiro**
  **Settsu-shi, Osaka 566-0044 (JP)**
- **YOKOTANI, Kouji**
  **Settsu-shi, Osaka 566-0044 (JP)**
- **KOMATSU, Nobuyuki**
  **Settsu-shi, Osaka 566-0044 (JP)**
- **KOU, Meiten**
  **Settsu-shi, Osaka 566-0044 (JP)**
- **KANEMURA, Takashi**
  **Settsu-shi, Osaka 566-0044 (JP)**

(74) Representative: **HOFFMANN EITLE**
**Patent- und Rechtsanwälte**
**Arabellastrasse 4**
**81925 München (DE)**

# (54) HYDROPHOBIC DIELECTRIC FILM FOR ELECTROWETTING

(57) An object of the present invention is to provide a hydrophobic dielectric film for electrowetting, which can drive a conductive liquid by using a low voltage. The present invention provides a hydrophobic dielectric film for electrowetting containing a vinylidene fluoride based polymer.

[Fig. 2]

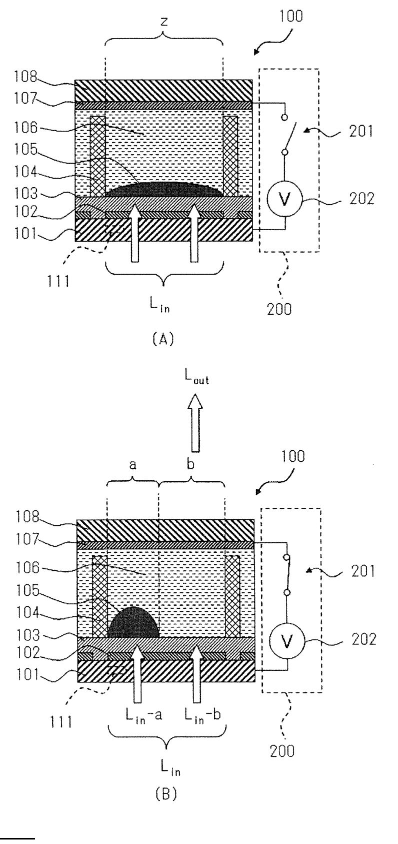


EP 2 674 804 A1

Printed by Jouve, 75001 PARIS (FR)

## Description

### Technical Field

The present invention relates to a hydrophobic dielectric film for electrowetting.

### Background Art

Electrowetting refers to modifying the wettability of the surface of a hydrophobic dielectric film between hydrophobic (water-repellent) and hydrophilic states by applying an electric field. A conductive liquid on the hydrophobic dielectric film surface can be driven by electrowetting. This mechanism can drive a conductive liquid without requiring a mechanical moving part, and it is thus advantageous in terms of downsizing the device and extending device life. For this reason, proposals have been made to apply an electrowetting device to, in particular, an optical element in a display device, a liquid lens capable of changing to any focal distance, and low-volume liquid delivery in testing equipment, as well as to various other uses.

Driving a conductive liquid as described above, however, requires a high voltage, which results in the problem of the device consuming too much power. This problem has interfered with achieving practical use of electrowetting devices.

The wettability of the surface of a hydrophobic derivative film is expressed by a contact angle.

The contact angle $\theta_v$ between the conductive liquid and the hydrophobic dielectric film when the applied voltage is V is known to be represented by the following Equation (1):

$$\cos\theta_v = \cos\theta_0 + \frac{\varepsilon_0\varepsilon}{2l\,\gamma_{LG}}V^2 \qquad (1)$$

The symbols in the equation mean the following.

$\theta_v$: Contact angle between the conductive liquid and the hydrophobic dielectric film when the applied voltage is V
$\theta_0$: Contact angle between the conductive liquid and the hydrophobic dielectric film with no applied voltage
$\gamma_{LG}$: Surface tension of the conductive liquid
$\varepsilon$: Relative dielectric constant of the hydrophobic dielectric film
$\varepsilon_0$: Dielectric constant *in vacuo*
1: Membrane thickness of the dielectric membrane
V: Applied voltage

As described above, a conductive liquid is driven on the basis of the modification of the wettability of the hydrophobic dielectric film. Therefore, as is clear from the equation above, reducing the voltage required for driving the conductive liquid requires a reduction in the membrane thickness of the dielectric membrane or an increase in the dielectric constant.

However, a reduction in the membrane thickness easily causes the formation of pinholes, which is more likely to result in electrical breakdown.

There have been examples in which a hydrophobic film formed of fluorine material is used as a hydrophobic film; however, such a hydrophobic film has a low relative dielectric constant (5 or less).

To solve this problem, Patent Document 1, for example, proposes anodizing only a surface of metal used as an electrode to form a dielectric membrane, thereby inhibiting the formation of pinholes and enabling the formation of a thin dielectric membrane, which achieves a reduction in the drive voltage.

### Citation List

### Patent Document

Patent Document: JP2008-107826A

## Summary of Invention

### Technical Problem

Nevertheless, there is still demand for providing a technique by which a conductive liquid can be driven using a low voltage.

### Solution to Problem

The present inventors found that a hydrophobic dielectric film for electrowetting, comprising a vinylidene fluoride based polymer (A) and high-dielectric inorganic particles (B), can solve the problems described above. The present invention was thereby completed.

More specifically, the present invention provides the embodiments, etc., described in the following items.

Item 1. A hydrophobic dielectric film for electrowetting, comprising a vinylidene fluoride based polymer.

Item 2. The hydrophobic dielectric film for electrowetting according to Item 1, wherein the vinylidene fluoride based polymer is a vinylidene fluoride/tetrafluoroethylene based copolymer.

Item 3. The hydrophobic dielectric film for electrowetting according to Item 1 or 2, further comprising high-dielectric inorganic particles.

Item 4. The hydrophobic dielectric film for electrowetting according to any one of Items 1 to 3,
wherein the high-dielectric inorganic particles are particles of at least one type of metal oxide selected from the group consisting of
metal oxides represented by Formula (Ba):

$$M^a_{na}M^b_{nb}O_{nc},$$

wherein
$M^a$ is a metal element of Group 2 of the periodic table,
$M^b$ is a metal element of Group 4 of the periodic table,
na is 0.9 to 1.1,
nb is 0.9 to 1.1, and
nc is 2.8 to 3.2; and
metal oxides represented by Formula (Bb):
$M^a_{na}M^{b'}_{nb'}O_{nc}$,
wherein
$M^a$ is a metal element in Group 2 of the periodic table,
$M^{b'}$ is a metal element in Group 5 of the periodic table,
na is 0.9 to 1.1,
nb' is 0.9 to 1.1, and
nc is 2.8 to 3.2.

Item 5. The hydrophobic dielectric film for electrowetting according to Item 4, wherein the metal oxide is barium titanate.

Item 6. The hydrophobic dielectric film for electrowetting according to any one of Items 3 to 5, wherein the hydrophobic dielectric film comprises the high-dielectric inorganic particles in an amount of 10 to 100 parts by mass per 100 parts by mass of the vinylidene fluoride based polymer.

Item 7. An electrowetting device comprising:

a first electrode;
a second electrode;
a conductive liquid movably disposed between the first electrode and the second electrode; and
the hydrophobic dielectric film for electrowetting of any one of Items 1 to 6 disposed between the first electrode

and the conductive liquid, such that the first electrode is insulated from the second electrode.

Advantageous Effects of Invention

The hydrophobic dielectric film for electrowetting of the present invention can drive a conductive liquid by using a low voltage.

The electrowetting device of the present invention consumes low electric power because the conductive liquid of the device can be driven using a low voltage.

Brief Description of Drawings

Fig. 1 is a sectional view showing an embodiment of the overall structure of the optical element of the present invention.
Fig. 2 is a schematic view showing the action of the optical element of Fig. 1.
Fig. 3 is a sectional view showing a specific example of the structure of a laminate having the hydrophobic dielectric film for electrowetting of the present invention.

Description of Embodiments

1. Hydrophobic Dielectric Film for Electrowetting

The hydrophobic dielectric film for electrowetting of the present invention comprises a vinylidene fluoride based polymer.

1.1. Vinylidene Fluoride based Polymer

Examples of the vinylidene fluoride based polymer (VdF polymer) include (1) VdF homopolymers (PVdF) and (2) copolymers of VdF with one or more kind of other monomers copolymerizable with the VdF.

Examples of the other monomers copolymerizable with VdF include tetrafluoroethylene (TFE), chlorotrifluoroethylene (CTFE), trifluoroethylene (TrFE), monofluoroethylene, hexafluoropropylene (HFP), perfluoro(alkyl vinyl ether) (PAVE), and like fluorine-containing olefins; fluorine-containing acrylates; and fluorine-containing monomers having functional groups.

Of these, preferable examples are TFE, CTFE, TrFE, and HFP because they have excellent solvent solubility.

The expression "perfluoro" as used herein means that all of the hydrogens (or all of the hydrogens excluding one hydrogen) in a hydrocarbon compound (or a hydrocarbon group) are substituted with fluorine.

The percentage of copolymerization of VdF in the VdF based polymer is preferably 50 mol% or more, more preferably 60 mol% or more, and still more preferably 70 mol% or more, from the viewpoint of high relative dielectric constant and high solvent solubility.

Specific examples of the VdF based polymer include PVdF, VdF/TFE based copolymers, VdF/TFE/HFP based copolymers, VdF/HFP based copolymers, VdF/TrFE based copolymers, and VdF/CTFE based copolymers. Of these, preferable examples are PVdF, VdF/TFE based copolymers, VdF/TrFE based copolymers, and VdF/HFP based copolymers; more preferable examples are PVdF, VdF/TrFE based copolymers, and VdF/TFE based copolymers; and still more preferable examples are VdF/TFE copolymers, from the viewpoint of high relative dielectric constant and excellent solvent solubility. VdF/TFE copolymers have a particularly high relative dielectric constant; therefore, the use of a hydrophobic dielectric film for electrowetting, comprising a VdF/TFE copolymer, can particularly reduce electric power consumption.

When the VdF based polymer is a VdF/TFE based copolymer, it is preferable that the unit content of VdF be 60 to 95 mol%, and the unit content of TFE be 5 to 40 mol%; it is more preferable that the unit content of VdF be 65 to 90 mol%, and the unit content of TFE be 10 to 35 mol%, from the viewpoint of high withstand voltage.

The lower limit of the relative dielectric constant (25°C, 1 kHz) of the VdF based polymer is preferably 3, more preferably 5, still more preferably 8, and particularly preferably 9 or more, from the viewpoint of high withstand voltage, high insulation properties, and high relative dielectric constant, as well as high relative dielectric constant in the form of a film. The upper limit thereof is not particularly limited, and is generally 12, preferably 11.

The VdF based polymer (A) may be used singly or in a combination of two or more.

The hydrophobic dielectric film for electrowetting of the present invention contains the fluorine-containing polymer (A) preferably in an amount of 50 w/w% or more.

1.2. High-dielectric Inorganic Particles (B)

High-dielectric inorganic particles (B) are preferably particles of at least one type of metal oxide selected from the group consisting of, for example, the following metal oxides of Formula (Ba) and metal oxides of Formula (Bb).

A metal oxide represented by Formula (Ba):

$$M^a_{na}M^b_{nb}Onc,$$

wherein
$M^a$ is a metal element of Group 2 of the periodic table,
$M^b$ is a metal element of Group 4 of the periodic table,
na is 0.9 to 1.1,
nb is 0.9 to 1.1, and
nc is 2.8 to 3.2 (hereinafter also referred to as Metal Oxide (Ba)).

Preferable examples of the metal element $M^a$ of Group 2 of the periodic table in Metal Oxide (Ba) include beryllium (Be), magnesium (Mg), calcium (Ca), strontium (Sr), and barium (Ba). Preferable examples of the metal element $M^b$ of Group 4 of the periodic table include titanium (Ti) and zirconium (Zr). In the particles of a metal oxide represented by Formula (Ba), $M_a$ and $M_b$ may each be a single element or multiple elements.

Examples of Metal Oxide (Ba) include barium titanate, barium zirconate, calcium titanate, calcium zirconate, strontium titanate, and strontium zirconate, with barium titanate being particularly preferable.

A metal oxide represented by Formula (Bb):

$$M^a_{na}M^{b'}_{nb'}O_{nc},$$

wherein
$M^a$ is a metal element of Group 2 of the periodic table,
$M^{b'}$ is a metal element of Group 5 of the periodic table,
na is 0.9 to 1.1,
nb' is 0.9 to 1.1, and
nc is 2.8 to 3.2 (hereinafter also referred to as Metal Oxide (Bb)).

Preferable examples of the metal element $M^a$ of Group 2 of the periodic table in Metal Oxide (Bb) include beryllium (Be), magnesium (Mg), calcium (Ca), strontium (Sr), and barium (Ba). Preferable examples of the metal element $M^{b'}$ of Group 5 of the periodic table include tin (Sn), antimony (Sb), zirconium (Zr), and indium (In). In the particles of a metal oxide represented by Formula (Bb), $M^a$ and $M^{b'}$ may each be a single element or multiple elements.

Specific examples of Metal Oxide (Bb) include magnesium stannate, calcium stannate, strontium stannate, barium stannate, magnesium antimonate, calcium antimonate, strontium antimonate, barium antimonate, magnesium zirconate, calcium zirconate, strontium zirconate, barium zirconate, magnesium indate, calcium indate, strontium indate, and barium indate.

Of these, preferable examples are barium titanate, barium calcium zirconium titanate, and strontium titanate; and a more preferable example is barium titanate, from the viewpoint of high relative dielectric constant.

A single type or a combination of two or more types of the high-dielectric inorganic particles (B) may be used.

In combination of such above-mentioned metal oxide particles, particles of lead zirconate titanate, zinc titanate, lead titanate, or other metal oxides (in particular, a composite oxide of titanium oxide, other than those mentioned above) may also be used.

The upper limit of the mass-average primary particle diameter of the high-dielectric inorganic particles (B) is preferably 500 nm, and more preferably 100 nm, from the viewpoint of excellent uniform dispersibility in the film. If the mass-average particle diameter is too small, a high relative dielectric constant may not be obtained; therefore, the lower limit of the mass-average particle diameter is preferably 10 nm, more preferably 20 nm, and still more preferably 50 nm.

The lower limit of the relative dielectric constant (25°C, 1 kHz) of the high-dielectric inorganic particles (B) is preferably 100, and more preferably 300. The upper limit thereof is not particularly limited, and is typically about 3,000.

The lower limit of the amount of the high-dielectric inorganic particles (B) contained in the hydrophobic dielectric film for electrowetting of the present invention is preferably 10 parts by mass, more preferably 50 parts by mass, and still more preferably 150 parts by mass, per 100 parts by mass of the VdF based polymer (A). If this amount is too small, the relative dielectric constant of the film tends to decrease. The upper limit of the amount is preferably 300 parts by mass, more preferably 250 parts by mass, and still more preferably 100 parts by mass. If the amount is too large, the film is likely to weaken.

1.3. Other Components

The hydrophobic dielectric film for electrowetting of the present invention may contain other components, such as a compatibility improver, if desired.

A compatibility improver enhances compatibility between high-dielectric inorganic particles and the vinylidene fluoride based polymer, which allows the high-dielectric inorganic particles to be uniformly dispersed in the vinylidene fluoride based polymer, while achieving strong bonding between the high-dielectric inorganic particles and vinylidene fluoride based polymer within the film. This inhibits the occurrence of voids and achieves an increase in the relative dielectric constant.

As the compatibility improver, a coupling agent, a surfactant, or an epoxy-containing compound is effective.

Examples of the coupling agent used as a compatibility improver include organic titanium compounds, organic silane compounds, organic zirconium compounds, organic aluminum compounds, and organic phosphorous compounds.

Examples of the organic titanium compounds include coupling agents, such as alkoxy titanium, titanium chelate, and titanium acylate. Of these, preferable examples are alkoxy titanium and titanium chelate because they have excellent compatibility with the high-dielectric inorganic particles (B).

Specific examples thereof include tetraisopropyl titanate, titanium isopropoxyoctylene glycolate, diisopropoxy bis(acetylacetonato)titanium, diisopropoxytitanium diisostearate, tetraisopropyl bis(dioctyl phosphite) titanate, isopropyl tri (n-aminoethyl-aminoethyl) titanate, and tetra(2,2-diallyloxymethyl-1-butyl) bis(di-tridecyl) phosphite titanate.

The organic silane compound may be a high or low molecular weight compound. Examples thereof include alkoxysilanes, such as monoalkoxysilane, dialkoxysilane, trialkoxysilane, and tetraalkoxysilane. Vinylsilane, epoxysilane, aminosilane, methacroxy silane, or mercaptosilane may also be preferably used.

When alkoxysilane is used, hydrolysis may be performed to achieve further improvement in the volume resistivity (improvement in insulation), which is an effect of the surface treatment.

Examples of organic zirconium compounds include alkoxy zirconium and zirconium chelate.

Examples of organic aluminum compounds include alkoxy aluminum and aluminum chelate.

Examples of organic phosphorous compounds include phosphite ester, phosphate ester, and phosphoric chelate.

A surfactant used as a compatibility improver may be a high or low molecular weight surfactant. Examples thereof include nonionic surfactants, anionic surfactants, and cationic surfactants. Of these, high molecular weight surfactants are preferable because they have excellent thermal stability.

Examples of nonionic surfactants include polyether derivatives, polyvinylpyrrolidone derivatives, and alcohol derivatives. Of these, polyether derivatives are preferable because they have excellent compatibility with the high-dielectric inorganic particles (B).

Examples of anionic surfactants include sulfonic acid, carboxylic acid, polymers of salts thereof, and the like. Of these, preferable examples are acrylic acid derivative based polymers and methacrylic acid derivative based polymers because they have excellent compatibility with the VdF based polymer (A).

Examples of cationic surfactants include amine compounds; compounds having nitrogen-containing type heterocycles, such as imidazoline; and halogen salts thereof.

The epoxy-containing compound used as a compatibility improver may be a low or high molecular weight compound. Examples thereof include epoxy compounds and glycidyl compounds. Of these, low molecular weight compounds having one epoxy group are preferable because they have particularly excellent compatibility with the VdF based polymer (A).

From the viewpoint of excellent compatibility with the VdF based polymer (A), preferable examples of epoxy-containing compounds are compounds represented by the following formula:

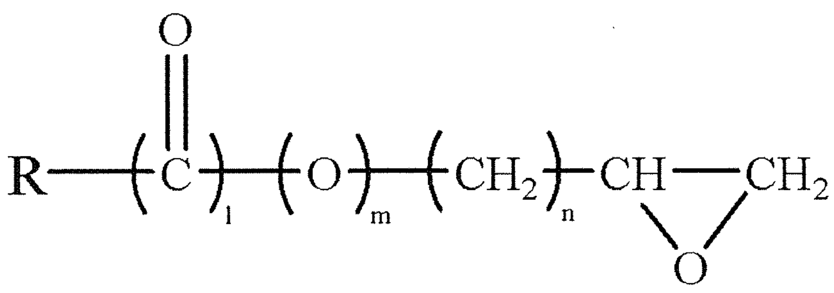

wherein

R is

(1) (a) hydrogen, (b) methyl, or (c) $C_{2-10}$ hydrocarbon optionally intercalated by oxygen or nitrogen, or
(2) an optionally substituted aromatic ring;

1 represents 0 or 1;
m represents 0 or 1; and
n represents an integer of 0 to 10.

Specific examples thereof include:

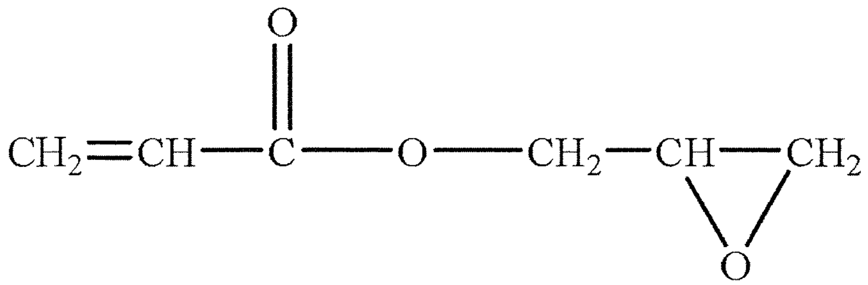

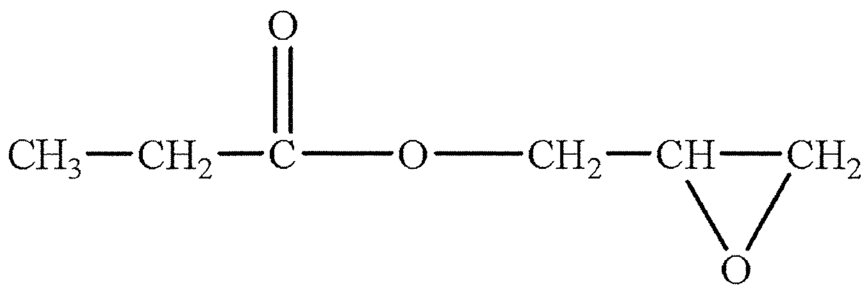

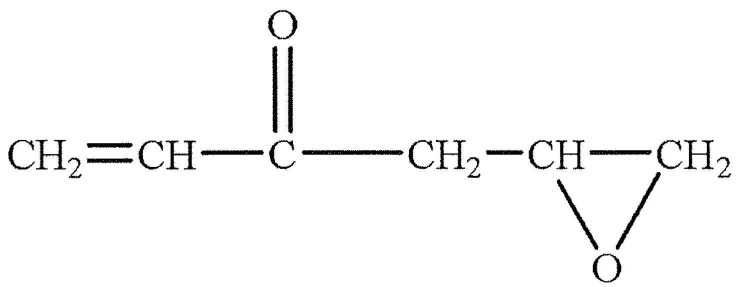

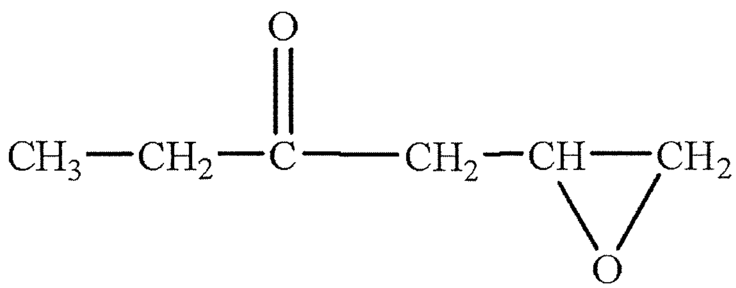

,

and like compounds containing ketone or ester groups.

A compatibility improver may be used in an amount within the range that does not impair the effect of the present invention. Specifically, in order to achieve uniform dispersion and high relative dielectric constant of the obtained

film, the amount is preferably 0.01 to 30 parts by mass, more preferably 0.1 to 25 parts by mass, and still more preferably 1 to 20 parts by mass, per 100 parts by mass of the high-dielectric inorganic particles (B).

The hydrophobic dielectric film for electrowetting of the present invention may further contain other additives to an extent that does not impair the effect of the present invention.

To achieve a reduction in the voltage required for driving a conductive liquid, the upper limit of the film thickness of the hydrophobic dielectric film for electrowetting of the present invention is preferably 15 μm, more preferably 10 μm, still more preferably 5 μm, and particularly preferably 2 μm. The hydrophobic dielectric film for electrowetting of the present invention is preferably thin. To maintain mechanical strength, however, the lower limit of the film thickness is usually about 10 nm.

The hydrophobic dielectric film for electrowetting of the present invention preferably has a relative dielectric constant of 9 or higher, more preferably 15 or higher, and still more preferably 20 or higher (measurement conditions: 30°C, 100 Hz to 10 kHz).

The hydrophobic dielectric film for electrowetting of the present invention may be a self-supporting film or a coated film.

Production Method

The hydrophobic dielectric film for electrowetting of the present invention can be produced by a well-known film-forming method, such as a melt extrusion method or a casting method.

Considering the simplicity of the method and the excellent uniformity of the obtained film, a casting method is advantageous.

Examples of production methods using a casting method include, for example, a method comprising: (1) dissolving or dispersing the VdF polymer (A), the high-dielectric inorganic particles (B), and optionally added other components (C), described above, in a solvent to prepare a liquid composition; (2) applying the thus-prepared liquid composition to a substrate and drying the applied composition to form a film; and (3) peeling the film from the substrate, if desired.

As the solvent, any solvent that can dissolve or uniformly disperse the VdF based polymer (A) may be used. In particular, a polar organic solvent is preferable. Preferable examples of polar organic solvents include ketone type solvents, ester type solvents, carbonate type solvents, cyclic ether type solvents, and amide type solvents. Preferable specific examples thereof include methylethyl ketone, methyl isobutyl ketone (MIBK), acetone, diethyl ketone, dipropyl ketone, ethyl acetate, methyl acetate, propyl acetate, butyl acetate, ethyl lactate, dimethyl carbonate, diethyl carbonate, dipropyl carbonate, methylethyl carbonate, tetrahydrofuran, methyltetrahydrofuran, dioxane, dimethylformamide (DMF), and dimethylacetamide.

Examples of usable methods for applying the liquid composition to a substrate include a knife coating method, cast coating method, roll coating method, gravure coating method, blade coating method, rod coating method, and air-doctor coating method. Of these, a roll coating method, gravure coating method, or cast coating method is preferable, from the viewpoint of easy operability, less variation in film thickness, and excellent productivity.

Such a coating method can form a very thin hydrophobic dielectric film for electrowetting.

In the hydrophobic dielectric film for electrowetting of the present invention, when an electric charge is applied to the surface of the film, the wettability of the surface is modified, and the conductive liquid being in contact with the surface is thereby driven. Further, in the hydrophobic dielectric film for electrowetting of the present invention, when an electric charge is applied to the surface of the film, the electric charge is accumulated on the surface, and the Coulomb force on the electric charge thus drives a nearby liquid.

Examples of the conductive liquid include, but are not limited to, water and aqueous solutions containing an electrolyte (e.g., potassium chloride or sodium chloride). The conductive liquid is generally a polar liquid.

Driving a conductive liquid means moving the conductive liquid or distorting the conductive liquid.

The hydrophobic dielectric film for electrowetting of the present invention has a high relative dielectric constant, as mentioned above, and a conductive liquid can thereby be driven using a low voltage. For this reason, the hydrophobic dielectric film for electrowetting of the present invention can be suitably used for an electrowetting device in an optical element, display device (display), varifocal lens, light modulation device, optical pickup device, optical recording/reproducing device, developing device, droplet operation device, analytical instrument (e.g., chemical, biochemical, or biological analytical instruments in which moving a minute amount of conductive liquid is required for a sample analysis), or the like.

The hydrophobic dielectric film for electrowetting of the present invention has flexibility, and can thus be suitably used for such various purposes.

In order to use the hydrophobic dielectric film for electrowetting of the present invention in the above-mentioned electrowetting devices, a laminate or the like may be used, comprising a substrate, an electrode formed on at least a portion of the substrate, an inorganic high-dielectric layer disposed on the substrate so as to cover the electrode, and

the hydrophobic dielectric film for electrowetting of the present invention disposed on the inorganic high-dielectric layer.

When the electrode is formed on one entire main surface of the substrate, the electrode is present between the substrate and the inorganic high-dielectric layer.

The substrate may be formed of, for example, a light-transmissive insulation material, such as glass or transparent resin. There is no limitation to the substrate, insofar as an electrode can be formed thereon. Examples of transparent resins include polyethylene terephthalate (PET) resins, polycarbonate (PC) resins, polyimide (PI) resins, polymethylmethacrylates (PMMA), polystyrene resins, and the like.

The thickness of the substrate is not particularly limited, and it is, for example, 1 $\mu$m to 100 mm.

The electrode may be formed of, for example, a transparent conductive material, such as indium oxide ($In_2O_3$), tin oxide ($SnO_2$), or ITO (Indium Tin Oxide), which is a mixture of $In_2O_3$ and $SnO_2$. The electrode may also be an $In_2O_3$ film, $SnO_2$ film, or ITO film, which are doped with tin (Sn), antimony (Sb), fluorine (F), or the like.
The electrode may also be formed of, for example, magnesium oxide (MgO) or zinc oxide (ZnO). The electrode may also be an aluminum (Al)-doped ZnO (AZO) film, a gallium (Ga)-doped ZnO (GZO) film, or an indium-doped ZnO film.
Further, the electrode may alternatively be formed of, for example, a transparent organic conductive material selected fromconductive polymers such as thiophene-based conductive polymers, polyaniline and polypyrrole. The electrode may also be formed of a metal material, such as aluminum, copper, chromium, nickel, zinc, stainless steel, gold, silver, platinum, tantalum, titanium, niobium, and molybdenum.

The inorganic high-dielectric layer preferably has high insulation properties and a high dielectric constant. For example, the insulation properties and dielectric constant of the inorganic high-dielectric layer are preferably about the same as those of the hydrophobic dielectric film for electrowetting of the present invention. The presence of the inorganic high-dielectric layer can improve the electric insulation properties and withstand voltage of the laminate.

The inorganic high-dielectric layer is formed of, for example, an inorganic insulation coating material containing silica. Examples of such an inorganic insulation coating material include commercially available inorganic coating materials (e.g., AT-201 (trade name), Nissan Chemical Industries, Ltd.).

The inorganic high-dielectric layer preferably has a volume resistivity of $10^{13}$ $\Omega\cdot$cm or higher, more preferably $10^{14}$ $\Omega\cdot$cm or higher, and still more preferably $10^{15}$ $\Omega\cdot$cm or higher, to obtain high electric insulation properties and high withstand voltage.

The lower limit of the thickness of the inorganic high-dielectric layer is preferably 0.5 $\mu$m, more preferably 1 $\mu$m, and still more preferably 2 $\mu$m, to obtain excellent insulation properties and to achieve an improvement in withstand voltage. The upper limit thereof is preferably 5 $\mu$m, and more preferably 3 $\mu$m, to maintain high dielectric performance.

The laminate described above can be produced, for example, by the following method.

An electrode is formed on a substrate mentioned above by sputtering method or a vapor deposition method. Subsequently, a solution of an inorganic insulation coating material mentioned above is applied by a spin coating method to the main surface of the substrate so as to cover the electrode, and it is then burned to form an inorganic high-dielectric layer. On the thus-formed inorganic high-dielectric layer, the hydrophobic dielectric film for electrowetting of the present invention is formed, for example, by a casting method or other method, which is mentioned above in the description of the production method of the hydrophobic dielectric film for electrowetting, to thereby obtain a laminate.

## 2. Electrowetting Device

The hydrophobic dielectric film for electrowetting of the present invention can be suitably used as a film for an electrowetting device.

The electrowetting device of the present invention comprises a first electrode, a second electrode, a conductive liquid movably disposed between the first electrode and the second electrode, and a film for an electrowetting device, the film being disposed between the first electrode and the conductive liquid, such that the first electrode is insulated from the second electrode.

In the electrowetting device of the present invention, when a predetermined voltage is applied across the first electrode and the second electrode, an electric field is generated on the surface of the film for an electrowetting device, and a conductive liquid is thereby driven, as described above in the description of the hydrophobic dielectric film for electrowetting of the present invention.

The conductive liquid is a liquid material having a polarity. Examples thereof include water and aqueous solutions containing an electrolyte (e.g., potassium chloride or sodium chloride).

The conductive liquid is as described above in the description of the hydrophobic dielectric film for electrowetting of the present invention, and preferably has a low viscosity.

The first electrode and the second electrode may each be as described above in the description of the laminate.

The electrowetting device of the present invention can be suitably applied to, for example, an optical element, display device (display), varifocal lens, light modulation device, optical pickup device, optical recording/reproducing device, developing device, droplet operation device, stroboscope device, analytical instrument (e.g., chemical, biochemical, or biological analytical instruments in which moving a minute amount of conductive liquid is required for a sample analysis), or the like.

Hereinafter, an optical element is described with reference to the drawings as one embodiment of the electrowetting device of the present invention. The present invention is, however, not limited thereto. Because priority in the figures is given to easy understanding, the figures do not precisely show the ratio of the dimensions. Note that the elements described below are not necessarily required in the present invention. In the following figures, the same reference numerals have the same meanings unless otherwise particularly specified.

Fig. 1 is a sectional view showing the structure of an optical element 100 as one embodiment of the electrowetting device of the present invention. The optical element 100 of Fig. 1 has two cell regions z. However, an optical element may have any number of cell regions z in the horizontal and longitudinal direction of Fig. 1. It is also possible to provide, for example, a single cell region z.

The optical element 100 includes a first substrate 101, a first electrode 102, a hydrophobic dielectric film 103 for electrowetting, a barrier 104, a hydrophobic liquid 105, a conductive liquid 106, a second electrode 107, a second substrate 108, and a side wall 109. A control unit 200 includes a switch 201 and a power source 202.

The first substrate 101 and the second substrate 108 are supported by the side wall 109 and face each other.

The first substrate 101 and the second substrate 108 are each formed of a material described above in the description of the substrate of the laminate.

Each cell region z in the first substrate 101 is provided with a driver element 111 and a signal wire (not shown, e.g., an electric wire) for transmitting a signal from a control unit 200 to allow the driver element 111 (e.g., thin-film transistor) to be individually driven.

The first electrode 102 is divided into multiple electrode members that are insulated from each other and disposed in such a manner that each electrode corresponds to each cell region z, so that a voltage can be applied to each cell region z. The first electrode 102 is connected to the corresponding driver element 111.

The first electrode 102 and the second electrode 107 are each formed of a material described above.

The hydrophobic dielectric film 103 for electrowetting is equal to the hydrophobic dielectric film, described above, for electrowetting of the present invention.

The barrier 104 is a partition member for dividing the cell region z, which is a unit region for transmitting light. The barrier 104 is vertically disposed on the hydrophobic dielectric film 103 for electrowetting.

It is required that the constituent material of the barrier 104 is insoluble both in the hydrophobic liquid 105 and the conductive liquid 106, and also does not undergo reaction. Examples of such materials include polymeric materials such as acrylic resins and epoxy resins.

It is possible to subject the surface of the barrier 104 to hydrophilic treatment so as to ensure compatibility with the conductive liquid 106. The hydrophilic treatment may be performed by a known method, such as ultraviolet irradiation, oxygen plasma irradiation, or laser irradiation.

The hydrophobic liquid 105 is retained within each cell region z divided by the barrier 104. Specifically, the barrier 104 prevents the hydrophobic liquid 105 from migrating (flowing out) to an adjacent cell region z. In each cell region z, the hydrophobic liquid 105 is preferably present in an amount sufficient to cover the entire surface of the hydrophobic dielectric film 103 for electrowetting when no electric field is applied to the surface of the hydrophobic dielectric film 103.

The hydrophobic liquid 105 contains a hydrophobic organic solvent as a medium. Examples of hydrophobic organic solvents include hydrocarbon having 6 to 35 carbon atoms, such as hexane, octane, decane, dodecane, hexadecane, undecane, benzene, toluene, xylene, mesitylene, butylbenzene, and 1,1-diphenylethylene; and silicone oil.

These hydrophobic organic solvents may be used singly or in a combination of two or more.

The hydrophobic liquid 105 contains a pigment or dye that absorbs light having a predetermined wavelength (e.g., visible light). The pigment or dye is dispersed or dissolved in the medium.

Examples of the pigment include titanium oxide, iron oxide, carbon black, azo pigments (e.g., azo lake), and polycyclic pigments (e.g., phthalocyanine pigments, perylene pigments, perinone pigments, anthraquinone pigments, quinacridone pigments, isoindolinone pigments, and quinophthalone pigments). The pigment is preferably highly dispersible in the hydrophobic liquid 105.

Examples of the dye include Oil Blue N (Sigma-Aldrich Co. LLC). The dye is preferably highly dissolvable in the hydrophobic liquid 105.

It is preferable that the hydrophobic liquid 105 has a low viscosity and is immiscible with the conductive liquid 106.

The hydrophobic liquid 105 is generally a non-polar liquid. The hydrophobic liquid 105 is generally a non-conductive liquid.

The conductive liquid 106 is retained between the hydrophobic dielectric film 103 for electrowetting and the second electrode 107. The hydrophobic liquid 105 and the conductive liquid 106 are separated and form two respective layers. The space between the hydrophobic dielectric film 103 for electrowetting and the second electrode 107 is preferably filled with the hydrophobic liquid 105 and the conductive liquid 106. Even in such a case, the conductive liquid

106 is movable because the hydrophobic liquid 105 is a fluid.

The conductive liquid 106 is a transparent liquid material having polarity. Examples thereof include water and aqueous solutions containing an electrolyte (e.g., potassium chloride or sodium chloride).

It is preferable that the conductive liquid 106 has a low viscosity and is immiscible with the hydrophobic liquid 105.

The side wall 109 is a seal member for hermetically sealing the hydrophobic liquid 105 and the conductive liquid 106 with the first substrate 101 and the second substrate 108. Examples of the material constituting the side wall 109 include silicone.

The control unit 200 performs drive control of the optical element 100.

The control unit 200 is provided with a switch 201 and a power source 202.

One terminal of the switch 201 is connected to the second electrode 107 by a lead, and the other terminal is connected to the first electrode 102 by a lead, via the power source 202 and the driver element 111.

The switch 201 may be either in the ON state, in which both terminals are electrically connected to each other, or the OFF state, in which both terminals are electrically disconnected from each other.

It is preferable that the power source 202 can change the amount of voltage to supply and also can provide a constant voltage.

Based on this, by operating the switch 201 and using voltage control of the power source 202, the control unit 200 can apply a predetermined voltage across the first electrode 102 and the second electrode 107. The selection of the cell region z, across which a predetermined voltage is applied, is made by selecting a driver element 111 by using a gate driver (not shown).

Referring now to Fig. 2, the following describes the movement of the optical element 100 having the structure described above. Fig. 2 shows an enlarged view of one cell region z of the optical element 100.

When the switch 201 of the control unit 200 is in the OFF state, and when no voltage is applied across the first electrode 102 and the second electrode 107, as shown in Fig. 2(A), the hydrophobic liquid 105 colored with a pigment or dye spreads to cover the entirety of each cell region z. Therefore, for example, when the hydrophobic liquid 105 absorbs visible light at all wavelengths, the incident light $L_{in}$ that enters a specific cell region z from the first substrate 101 side of Fig. 2(A) is blocked by the hydrophobic liquid 105 and does not pass through the cell region z. In contrast, when the switch 201 of the control unit 200 is in the ON state, and when a voltage is applied across the first electrode 102 and the second electrode 107, as shown in Fig. 2(B), the conductive liquid 106 is in contact, in a part (region b) of the cell region z, with the hydrophobic dielectric film 103 for electrowetting, while the hydrophobic liquid 105 is collected in the other part (region a) of each of the cell regions z. Therefore, in terms of the incident light $L_{in}$ that enters a specific cell region z from the first substrate 101 side, light $L_{in}$-a, which enters the region a, is blocked by the hydrophobic liquid 105, whereas the light $L_{in}$-b, which enters the region b, passes through the region and is emitted out as transmitted light $L_{out}$.

Fig. 3 shows one specific example of the laminate having the hydrophobic dielectric film for electrowetting of the present invention.

A laminate 150 comprises a first electrode 102 formed at least on a part of the first substrate 101, an inorganic high-dielectric layer 112 disposed on the first substrate 101 so as to cover the first electrode 102, and a hydrophobic dielectric film 103 for electrowetting disposed on the inorganic high-dielectric layer 112.

The inorganic high-dielectric layer 112 is formed of a material mentioned above.

The first substrate 101, the first electrode 102, and the hydrophobic dielectric film 103 for electrowetting are the same as those shown in Fig. 1.

The laminate 150 can be used in place of the portion consisting of the first substrate 101, the first electrode 102, and the hydrophobic dielectric film 103 for electrowetting of, for example, the optical element 100 shown in Fig. 1.

## Examples

The present invention is described below in further detail with reference to Examples. The present invention is, however, not limited thereto.

The characteristic values used in this specification are measured by the following method.

### Film Thickness

The film thickness was measured using a digital thickness meter (MF-1001, produced by Nikon Corporation).

### Dielectric Loss Tangent and Relative Dielectric Constant

Both surfaces of a film were subjected to aluminum vapor deposition *in vacuo* to prepare a sample. The electrostatic capacity and dielectric loss tangent of this sample were measured using an LCR meter (ZM2353, produced

by NF Corporation) in a dry air atmosphere at 30°C at a frequency of 100 Hz to 10 kHz. The relative dielectric constant was calculated based on the film thickness and electrostatic capacity.

Example 1

440 parts by mass of methylethyl ketone (MEK) (Kishida Chemical Co., Ltd.) and 60 parts by mass of a VdF/TFE copolymer (VdF/TFE = 67/33) (Daikin Industries, Ltd.) were placed into a 1-L poly bottle, and the mixture was stirred with a rotor, thereby obtaining a fluororesin solution having a concentration of 12 w/w%.

The fluororesin solution was casted using a microgravure coater on a polyethylene terephthalate (PET) film, which is a 38-μm-thick, mold-release-treated non-porous polyester film. The resulting product was passed through a drying furnace to obtain a laminated film in which a fluororesin film is formed on the PET film. Thereafter, a 4.5-μm-thick film was obtained by peeling it from the PET film.

Example 2

480 parts by mass of methylethyl ketone (MEK) (produced by Kishida Chemical Co., Ltd.) and 120 parts by mass of a VdF/TFE copolymer (VdF/TFE = 67/33) (Daikin Industries, Ltd.) were placed in a 1-L poly bottle, and the mixture was stirred with a rotor, thereby obtaining a fluororesin solution having a concentration of 20 w/w%. The relative dielectric constant of the VdF/TFE copolymer used herein was 9.8 (25°C, 1 kHz).

30 parts by mass of barium titanate (median size: 20 nm, BTO-020, Toda Kogyo Corp.) and 333 parts by mass of methylethyl ketone (MEK) were added to 500 parts by mass of the fluororesin solution obtained above (concentration: 20 w/w%). The resulting mixture was subjected to a dispersal treatment with a bead mill (LMZ015, Ashizawa Finetech Ltd.) for 30 minutes at a rotation speed of 10 m/s to obtain a coating composition.

The thus-obtained coating composition was casted using a microgravure coater on a polyethylene terephthalate (PET) film, which is a 38-μm-thick, mold-release-treated non-porous polyester film. The resulting product was passed through a drying furnace to obtain a laminated film in which a VdF based resin film is formed on the PET film. Thereafter, a 6.0-μm-thick high-dielectric film was obtained by peeling it from the PET film.

Example 3

A 9.1-μm-thick high-dielectric film was obtained by producing a coating composition and performing casting, as in Example 2, except that the amount of barium titanate was changed to 60 parts by mass.

Example 4

A 6.0-μm-thick high-dielectric film was obtained by producing a coating composition and performing casting, as in Example 1, except that the composition ratio of the VdF/TFE copolymer was changed to VdF/TFE = 80/20.

Example 5

A 6.2-μm-thick high-dielectric film was obtained by producing a coating composition and performing casting, as in Example 1, except that PVdF (VP825, Daikin Industries, Ltd.) was used in place of the VdF/TFE copolymer.

Example 6

44 parts by mass of methylethyl ketone (MEK) (KISHIDA CHEMICAL Co., Ltd.) and 6 parts by mass of a VdF/TFE copolymer (VdF/TFE = 67/33) (Daikin Industries, Ltd.) were placed in a 100-mL poly bottle, and the mixture was stirred with a rotor, thereby obtaining a fluororesin solution having a concentration of 12% by mass. This solution was applied to an aluminum plate by using a bar coater, and the solvent was volatilized in a drying furnace at 100°C to form a 4.0-μm-thick high-dielectric film on the aluminum plate.

Test Example 1

Data was obtained regarding the relative dielectric constant and the dielectric loss tangent of the film of Examples 1 to 5. Table 1 shows the results.

Table 1

| | Ex. 1 | Ex. 2 | Ex. 3 | Ex. 4 | Ex. 5 |
|---|---|---|---|---|---|
| Film-forming resin (parts by mass) | | | | | |
| VdF/TFE = 67/33 | 100 | 100 | 100 | - | - |
| VdF/TFE = 80/20 | - | - | - | 100 | - |
| PVDF (VdF = 100) | - | - | - | - | 100 |
| $BaTiO_3$ | - | 30 | 60 | - | - |
| Film properties | | | | | |
| Film thickness (μm) | 4.5 | 6.0 | 9.1 | 6.0 | 6.2 |
| Measurement temperature (30°C) | | | | | |
| Relative dielectric constant | | | | | |
| 100 Hz | 9.9 | 17.9 | 23.6 | 10.5 | 10.9 |
| 1 kHz | 9.6 | 17.3 | 22.7 | 10.3 | 10.4 |
| 10 kHz | 9.3 | 16.8 | 21.8 | 10.1 | 10.2 |
| Dielectric loss tangent (%) | | | | | |
| 100 Hz | 2.4 | 2.8 | 2.2 | 2.2 | 6.2 |
| 1 kHz | 2.3 | 2.7 | 2.2 | 1.8 | 3.3 |
| 10 kHz | 2.7 | 2.9 | 2.7 | 2.3 | 3.1 |

As is clear from Table 1, the film containing a VdF based polymer and high-dielectric inorganic particles has a high relative dielectric constant.

Test Example 2

Data was obtained regarding the contact angle of the film of Example 6. The contact angle was measured using a contact angle meter (Kyowa Interface Science Co., Ltd).

A saline solution having a concentration of 1 w/w% was dropped on a high-dielectric film to form a droplet having a diameter of 3 mm, and the contact angle was measured. Measurement was performed 3 times, and the average value was used as the contact angle before voltage application (0 V). Subsequently, a voltage of 120 V was applied across the water droplet, and the contact angle under voltage application was measured in a manner similar to the above. Table 2 shows the results.

Table 2

| Applied voltage (V) | Contact angle (° ) |
|---|---|
| 0 | 76.3 |
| 120 | 69.0 |

Industrial Availability

The hydrophobic dielectric film for electrowetting of the present invention can drive a conductive liquid by using a low voltage and is suitably used for an electrowetting device in an optical element, display device (display), varifocal lens, light modulation device, optical pickup device, optical recording/reproducing device, developing device, droplet operation device, analytical instrument (e.g., chemical, biochemical, or biological analytical instruments in which moving a minute amount of conductive liquid is required for a sample analysis), or the like.

Description of reference numerals

100 Optical Element

101 First Substrate
102 First Electrode
103 Hydrophobic Dielectric Film for Electrowetting
104 Barrier
105 Hydrophobic Liquid
106 Conductive Liquid
107 Second Electrode
108 Second Substrate
109 Side Wall
111 Driver Element
112 Inorganic High-dielectric Layer
150 Laminate
200 Control Unit
201 Switch
202 Power Source

**Claims**

1. A hydrophobic dielectric film for electrowetting, comprising a vinylidene fluoride based polymer.

2. The hydrophobic dielectric film for electrowetting according to claim 1, wherein the vinylidene fluoride polymer is a vinylidene fluoride/tetrafluoroethylene based copolymer.

3. The hydrophobic dielectric film for electrowetting according to claim 1 or 2, further comprising high-dielectric inorganic particles.

4. The hydrophobic dielectric film for electrowetting according to any one of claims 1 to 3,
wherein the high-dielectric inorganic particles are particles of at least one type of metal oxide selected from the group consisting of
metal oxides represented by Formula (Ba):

$$M^a_{na}M^b_{nb}O_{nc},$$

wherein
$M^a$ is a metal element of Group 2 of the periodic table,
$M^b$ is a metal element of Group 4 of the periodic table,
na is 0.9 to 1.1,
nb is 0.9 to 1.1, and
nc is 2.8 to 3.2; and
metal oxides represented by Formula (Bb):

$$M^a_{na}M^{b'}_{nb'}O_{nc},$$

wherein
$M^a$ is a metal element in Group 2 of the periodic table,
$M^{b'}$ is a metal element in Group 5 of the periodic table,
na is 0.9 to 1.1,
nb' is 0.9 to 1.1, and
nc is 2.8 to 3.2.

5. The hydrophobic dielectric film for electrowetting according to claim 4, wherein the metal oxide is barium titanate.

6. The hydrophobic dielectric film for electrowetting according to any one of claims 3 to 5, wherein the hydrophobic dielectric film comprises the high-dielectric inorganic particles in an amount of 10 to 100 parts by mass per 100 parts by mass of the vinylidene fluoride based polymer.

7. An electrowetting device comprising:

a first electrode;
a second electrode;
a conductive liquid movably disposed between the first electrode and the second electrode; and
the hydrophobic dielectric film for electrowetting of any one of claims 1 to 6 disposed between the first electrode and the conductive liquid, such that the first electrode is insulated from the second electrode.

[Fig. 1]

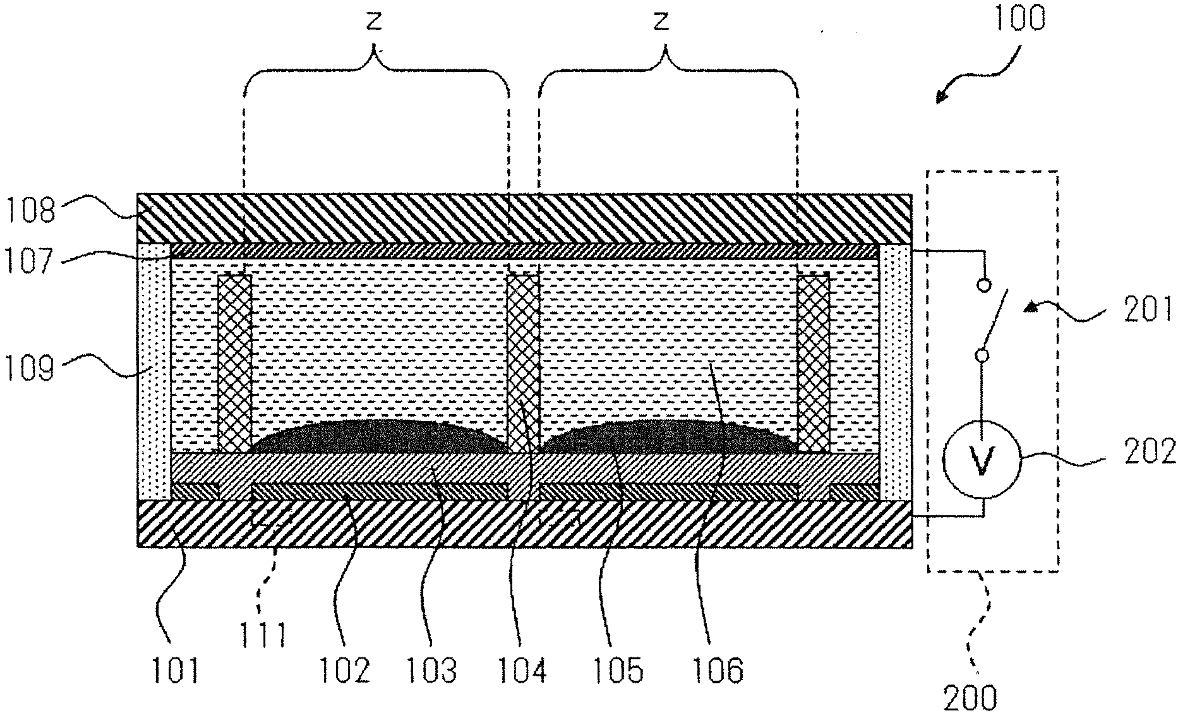

[Fig. 2]

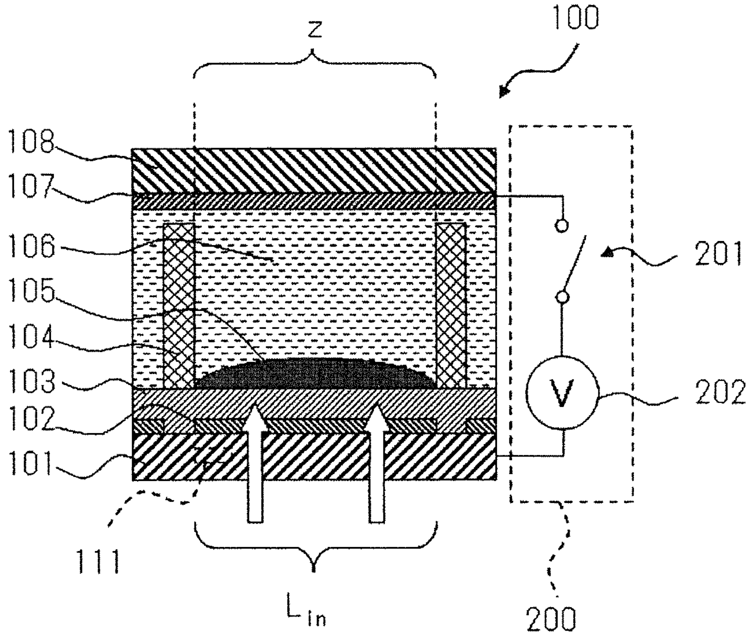
z
100
108
107
106
105
104
103
102
101
111
201
202
V
L in
200

(A)

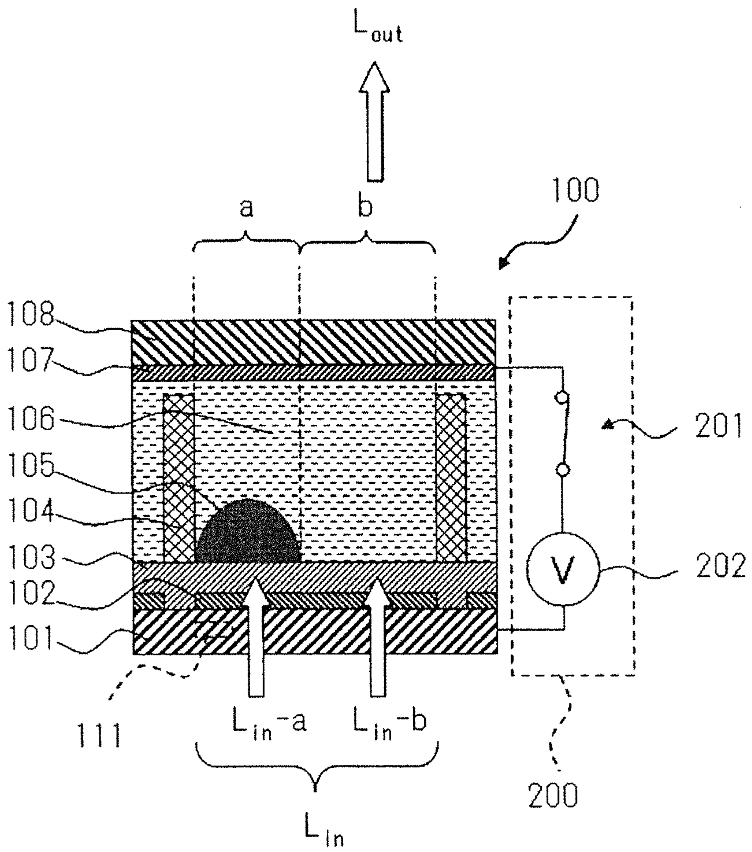
L out
a
b
100
108
107
106
105
104
103
102
101
111
201
202
V
L in -a
L in -b
L in
200

(B)

[Fig. 3]

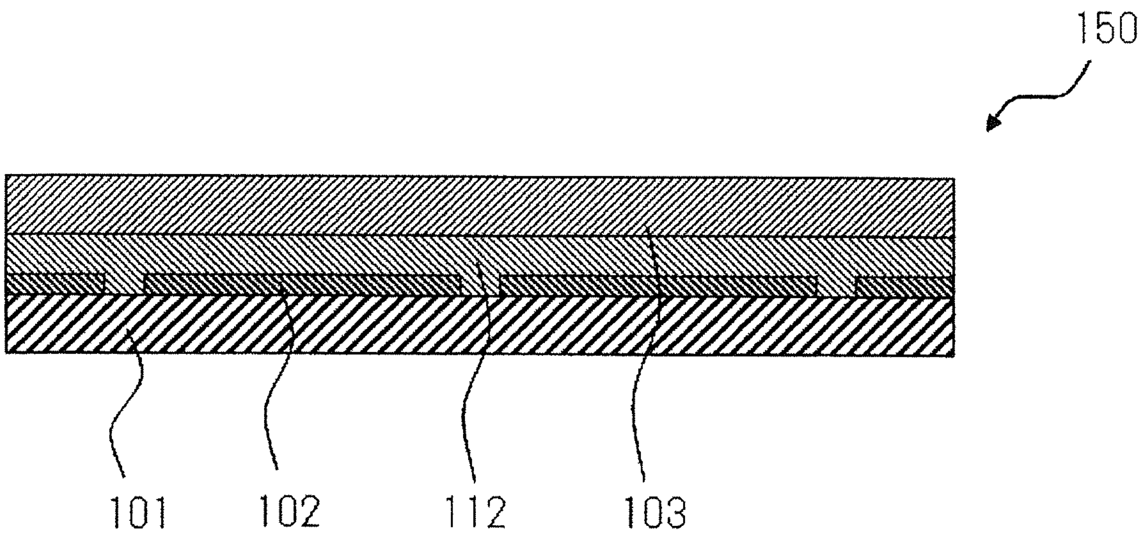

## INTERNATIONAL SEARCH REPORT

International application No.
PCT/JP2012/052858

A. CLASSIFICATION OF SUBJECT MATTER
*G02B26/00*(2006.01)i, *C08J5/18*(2006.01)i, *G01N1/00*(2006.01)i, *G02B3/14*(2006.01)i, *G02F1/17*(2006.01)i, *G11B7/135*(2012.01)i

According to International Patent Classification (IPC) or to both national classification and IPC

B. FIELDS SEARCHED

Minimum documentation searched (classification system followed by classification symbols)
G02B26/00-26/10, C08J5/18, G01N1/00, G02B3/14, G02F1/17, G11B7/135

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2009-210738 A (Sony Corp.),<br>17 September 2009 (17.09.2009),<br>paragraphs [0018] to [0025]; fig. 1 to 4<br>(Family: none) | 1,7<br>2-6 |
| X<br>Y | JP 2008-40455 A (Sony Corp.),<br>21 February 2008 (21.02.2008),<br>paragraphs [0030], [0031]; fig. 1, 2<br>& US 2009/0268303 A1 & EP 2040116 A1<br>& WO 2008/007797 A1 & KR 10-2009-0038425 A<br>& CN 101490614 A | 1,7<br>2-6 |
| Y | WO 2009/017109 A1 (Daikin Industries, Ltd.),<br>05 February 2009 (05.02.2009),<br>entire text; all drawings<br>& US 2010/0202100 A1 | 2-6 |

☒ Further documents are listed in the continuation of Box C. ☐ See patent family annex.

* Special categories of cited documents:
- "A" document defining the general state of the art which is not considered to be of particular relevance
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| | |
|---|---|
| Date of the actual completion of the international search<br>20 April, 2012 (20.04.12) | Date of mailing of the international search report<br>01 May, 2012 (01.05.12) |
| Name and mailing address of the ISA/<br>Japanese Patent Office<br><br>Facsimile No. | Authorized officer<br><br>Telephone No. |

Form PCT/ISA/210 (second sheet) (July 2009)

**INTERNATIONAL SEARCH REPORT**

International application No.
PCT/JP2012/052858

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2010/074026 A1 (Daikin Industries, Ltd.), 01 July 2010 (01.07.2010), entire text; all drawings & EP 2378529 A1 | 2-6 |
| Y | JP 2009-38088 A (Daikin Industries, Ltd.), 19 February 2009 (19.02.2009), entire text; all drawings (Family: none) | 2-6 |
| Y | JP 2009-38089 A (Daikin Industries, Ltd.), 19 February 2009 (19.02.2009), entire text; all drawings (Family: none) | 2-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2008107826 A


### Non-patent literature cited in the description


- AT-201 (trade name. Nissan Chemical Industries, Ltd,